# FASCICULE DE BREVET EUROPEEN

(11) **EP 2 802 852 B1**
(45) Date de publication et mention de la délivrance du brevet: **04.10.2017**
(21) Numéro de dépôt: 13700171.5
(22) Date de dépôt: 11.01.2013
(51) Int. Cl.: G06M 1/04, G04C 3/00, H02N 1/00, F16H 31/00

(54) **INDEXATION PASSIVE D'UN ÉLÉMENT MOBILE PRÉSENTANT DES DENTS**
PASSIVE INDEXIERUNG EINES BEWEGLICHEN ELEMENTS MIT ZÄHNEN
PASSIVE INDEXING OF A MOVABLE ELEMENT HAVING TEETH

(30) Priorité: 12.01.2012 FR 1250320
(43) Date de publication de la demande: 19.11.2014
(73) Titulaire: Silmach, 25000 Besançon (FR)
(72) Inventeur: MINOTTI, Patrice, F-25660 Gennes (FR); BOURBON, Gilles, F-25000 Besancon (FR); LE MOAL, Patrice, F-25000 Besancon (FR)
(74) Mandataire: Regimbeau
(86) Numéro de dépôt international: PCT/EP2013/050442
(87) Numéro de publication internationale: WO 2013/104738

(56) Documents cités:
- EP-A1- 2 177 960
- FR-A- 591 217
- FR-A- 695 379

## Description

### Domaine technique

L'invention concerne le domaine des microsystèmes électromécaniques (MEMS), et plus particulièrement, le verrouillage des micromoteurs MEMS à rotor microdenté (élément mobile) dédiés aux applications horlogères et à l'instrumentation scientifique ainsi que le verrouillage des microcapteurs MEMS dédiés à la détection et à la mémorisation mécanique passive de déformations structurelles au moyen de l'engrènement d'un rotor (compteur) denté (élément mobile).

### État de la technique

Les microtechnologies MEMS permettent de structurer des motifs mécaniques de très petites dimensions comparativement aux technologies de fabrication conventionnelles. Elles permettent notamment de structurer des rotors et/ ou des compteurs microdentés qui trouvent respectivement des applications naturelles dans le domaine des micromoteurs MEMS pas à pas à haute résolution angulaire, ainsi que dans le domaine des capteurs MEMS dédiés au contrôle de santé des structures.

Les micromoteurs MEMS à haute résolution angulaire (ou linéaire) ont des applications dans la montre à quartz ainsi que dans l'instrumentation scientifique pour des applications nécessitant une grande précision de positionnement. Cette technologie tire parti du potentiel de microstructuration de la matière (i.e. dents micrométriques).

Ces micromoteurs présentent en outre l'avantage de développer des efforts moteurs très supérieurs aux dispositifs de l'état de l'art utilisant le moteur LAVET comme organe d'entraînement. Les caractéristiques en charge des micromoteurs MEMS permettent d'assurer l'entraînement direct de la charge mécanique (aiguilles...) sans nécessiter le recours à des rouages chargés d'amplifier le couple moteur par démultiplication de vitesse.

L'abandon des rouages démultiplicateurs de vitesse est propice à une amélioration du rendement de la chaîne cinématique et, consécutivement, à une amélioration de l'autonomie énergétique. Cependant, l'entraînement direct ou quasi direct de la charge mécanique montée directement sur le rotor (élément mobile) occasionne des risques de déverrouillage intempestif du rotor lorsque la montre subit des chocs et/ou des accélérations parasites. Cet aléa n'existe pas dans le cas du moteur LAVET couplé à un réducteur de vitesse car l'irréversibilité des rouages assure la stabilité de la charge (aiguilles...) en cas de choc ou d'accélération parasite.

Les microcapteurs MEMS passifs dédiés au contrôle de santé des structures mettent également en oeuvre un compteur passif d'évènements mécaniques ou thermiques parasites (chocs, déformation, dilatation...) prenant la forme d'un rotor microdenté. Le principe de fonctionnement consiste à implanter un capteur passif (sans apport d'énergie) à la surface d'une structure subissant des sollicitations mécaniques ou thermiques, puis à comptabiliser, au moyen de l'engrènement d'une denture, les déformations structurelles subies par la structure surveillée.

Ainsi, lorsqu'un seuil de déformation prédéfini est franchi, la structure surveillée transmet au capteur une déformation qui est lue et mémorisée mécaniquement par l'engrènement d'une dent du compteur microdenté. Naturellement, le principe de fonctionnement reste valable quel que soit le type de déformation subi par la structure (traction, compression, flexion...).

Toutefois, comme dans le cas des micromoteurs MEMS, il convient d'assurer un verrouillage du rotor (compteur) lors d'une accélération intempestive afin que ledit compteur discrimine les déformations à comptabiliser et les chocs ou accélérations parasites qui ne doivent en aucun cas contribuer au franchissement de dents sur le compteur.

Le document EP 2 177 960 A1 propose l'utilisation d'un système de verrouillage de l'élément mobile comprenant deux doigts d'indexation qui engagent les dents de l'élément mobile de sorte qu'au moins l'un des deux maintienne l'élément mobile à tout instant.

Dans ce contexte, la présente invention concerne la mise en oeuvre de mécanismes assurant le verrouillage d'un rotor de micromoteur MEMS pas à pas et/ou le verrouillage d'un compteur (i.e. capteur) susceptible de subir des mouvements parasites propices à une désindexation intempestive d'une roue microdentée.

### Présentation

L'invention propose un dispositif comprenant :
- un élément mobile comportant des dents et destiné à être mis en mouvement ;
- un élément d'entraînement destiné à venir en prise avec les dents de l'élément mobile pour mettre en mouvement l'élément mobile dans un sens de déplacement ;
- un élément actionneur apte à générer un mouvement alternatif pour déplacer l'élément d'entraînement suivant au moins deux phases, une phase d'entraînement et une phase de retour.

Lors de la phase d'entraînement, l'élément d'entraînement est en prise avec au moins une dent de l'élément mobile pour pousser ou tracter l'élément mobile.

Lors de la phase de retour sans entraînement, l'élément d'entraînement est décalé par rapport à l'élément mobile pour être mis en prise avec au moins une autre dent de l'élément mobile.

Le dispositif comprend également un premier élément indexeur. Le premier élément indexeur comprend un premier doigt d'indexage destiné à être positionné par intermittence dans un espace compris entre deux dents de l'élément mobile pour empêcher un déplacement non-contrôlé par l'élément d'entraînement dans le sens de déplacement de l'élément mobile et dans le sens contraire.

Le premier élément indexeur est relié à l'élément actionneur de sorte que l'élément actionneur déplace simultanément l'élément d'entraînement et le premier doigt d'indexage.

Ainsi, un verrouillage passif de l'élément mobile est réalisé.

Lors de la phase d'entraînement, le premier doigt d'indexage peut être déplacé par l'élément actionneur hors de l'espace entre les deux dents de l'élément mobile alors que lors de la phase de retour, le premier doigt d'indexage est positionné par l'élément actionneur dans un autre espace entre deux autres dents de l'élément mobile

Dans un mode de réalisation particulier, l'élément actionneur peut comprendre une partie fixe et une partie mobile par rapport à la partie fixe, l'élément d'entraînement et l'élément indexeur étant reliés à la partie mobile.

Le premier élément indexeur peut comprendre :
- une première poutre comprenant une première extrémité libre et une deuxième extrémité reliée à l'élément actionneur ; et
- une deuxième poutre comprenant une première extrémité libre et une extrémité reliée à un châssis fixe du dispositif.

La première poutre et la deuxième poutre sont reliées entre elles par leurs extrémités libres respectives de sorte qu'un déplacement de la première poutre entrainé par l'élément actionneur provoque une flexion de la deuxième poutre ce qui a pour effet de déplacer le premier doigt d'indexage par rapport à l'élément mobile.

Ainsi, dès que l'élément d'entraînement est actionné, celui-ci provoque l'escamotage simultané du doigt d'indexage chargé de verrouiller passivement le rotor en cas de choc intempestif subi par le moteur.

Dans un autre mode de réalisation particulier, l'élément actionneur peut comprendre une plaque s'étendant suivant une direction longitudinale. La plaque comprend deux lames reliées entre elles par au moins deux traverses flexibles et fixées sur un support de sorte qu'une déformation en compression ou en traction du support génère un déplacement d'une lame par rapport à l'autre dans une direction de déplacement parallèle à la direction longitudinale de la plaque.

Chacune des lames peut comprendre une extrémité proximale et une extrémité distale, et comprend à son extrémité proximale un élément de fixation pour la fixation au support. Une traverse flexible relie l'extrémité distale d'une lame à l'extrémité proximale de l'autre lame.

Le dispositif peut comprendre en outre une base d'actionnement fixée sur une des lames, l'élément mobile étant fixé à rotation sur l'autre lame de la plaque. La base d'actionnement comprend alors une base l'élément d'actionnement et l'élément indexeur.

L'élément d'actionnement peut comprendre une poutre qui s'étend parallèlement à la direction de déplacement des lames et présente à son extrémité libre une dent d'entraînement. L'élément indexeur comprend alors une première poutre s'étendant parallèlement à la direction de déplacement des lames et présentant à son extrémité libre un doigt d'indexage et une deuxième poutre s'étendant parallèlement à la direction de déplacement des lames à partir de l'extrémité libre de la première poutre et en sens contraire, et portant à son extrémité libre une surface de contact La deuxième lame comprend alors une butée destinée à être contactée par la surface de contact lors de la mise en mouvement des lames l'une par rapport à l'autre pour éloigner le premier doigt d'indexage de l'élément mobile

Ce dispositif permet ainsi de verrouiller passivement le compteur d'un microcapteur MEMS utilisé dans la surveillance des déformations subies par une structure.

### Présentation des dessins

D'autres caractéristiques, buts et avantages ressortiront de la description qui suit en référence aux dessins donnés à titre illustratif et non limitatif parmi lesquels :
- la figure 1 présente de manière schématisée un premier exemple de réalisation d'un dispositif avec un seul élément indexeur dans sa position initiale ;
- les figures 2 à 5 présente de manière schématisée le dispositif de la figure 1 dans différentes positions lors de son fonctionnement ;
- les figures 6 à 10 présentent de manière schématisée un deuxième exemple de réalisation d'un dispositif avec un seul élément indexeur ;
- la figure 11 présente de manière schématisée un troisième exemple de réalisation d'un dispositif avec deux éléments indexeurs dans sa position initiale ;
- les figures 12 à 15 présente de manière schématisée le dispositif de la figure 11 dans différentes positions lors de son fonctionnement.

### Description détaillée

### Dispositif avec un seul élément indexeur

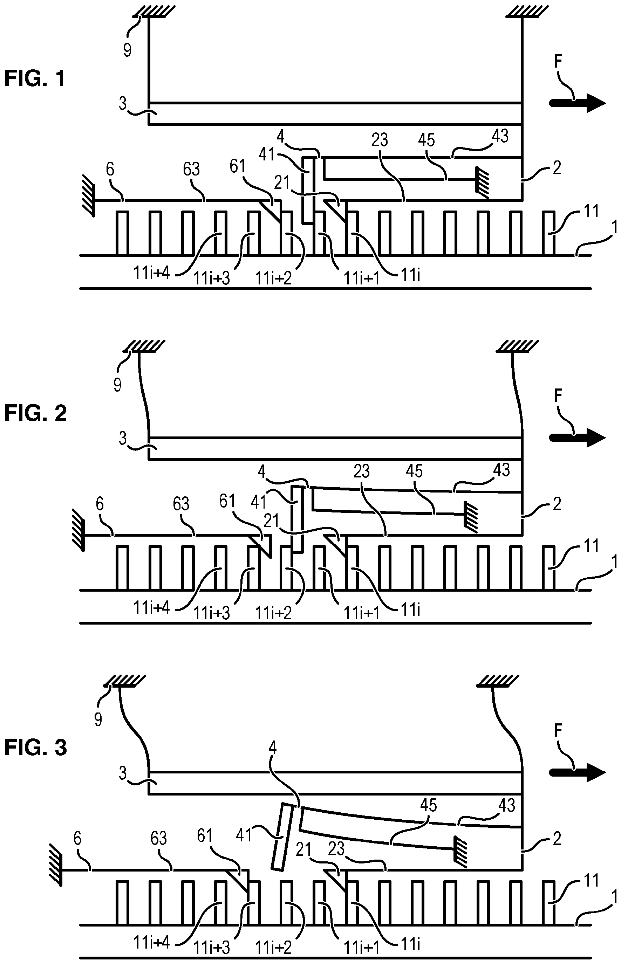

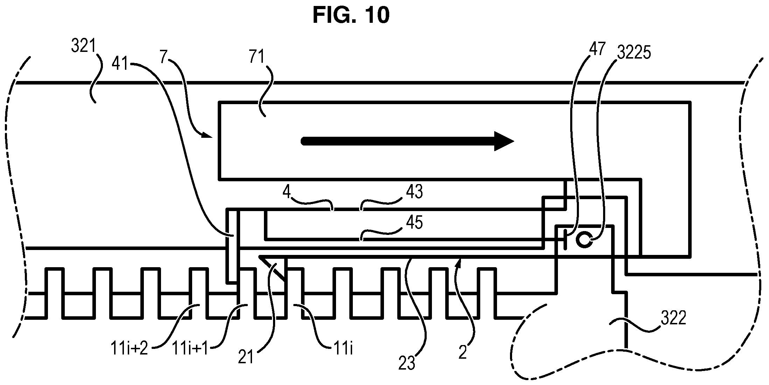

Un dispositif avec un seul élément indexeur est ci-après décrit en référence aux figures 1 à 10.

Le dispositif comprend un élément mobile **1** comportant des dents **11** et destiné à être mis en mouvement, et un élément d'entraînement **2** destiné à venir en prise avec les dents **11** de l'élément mobile **1** pour mettre en mouvement l'élément mobile **1** dans un sens de déplacement.

Le dispositif comprend également un élément actionneur **3** apte à générer un mouvement alternatif pour déplacer l'élément d'entraînement **2.**

Le dispositif comprend également un élément indexeur **4** présentant un doigt **41** d'indexage destiné à être positionné par intermittence dans un espace compris entre deux dents **11** de l'élément mobile **1** pour empêcher tout déplacement parasite (c'est-à-dire non souhaité) de l'élément mobile **1** lorsque l'élément actionneur est au repos.

L'élément indexeur **4** est relié à l'élément actionneur **3** de sorte que l'élément actionneur **3** déplace simultanément l'élément d'entraînement **2** et le doit d'indexage **41.**

La génération du mouvement alternatif comprend au moins deux phases : une phase d'entraînement et une phase de retour.

Lors de la phase d'entraînement, l'élément d'entraînement **2** est en prise avec au moins une dent **11** de l'élément mobile pour pousser ou tracter l'élément mobile **1.**

Par exemple, le doigt d'indexage **41** est déplacé par l'élément actionneur **3** hors de l'espace entre les deux dents **11** de l'élément mobile **1.**

Lors de la phase de retour sans entraînement, l'élément d'entraînement **2** est décalé par rapport à l'élément mobile **1** pour être mis en prise avec au moins une autre dent **11** de l'élément mobile **1.**

Par exemple, le doigt d'indexage **41** est positionné par l'élément actionneur **3** dans un autre espace entre deux autres dents **11** de l'élément mobile **1.**

Le dispositif peut également comprendre un élément anti-retour **6** pour empêcher le déplacement de l'élément mobile **1** dans le sens contraire au sens de déplacement de l'élément mobile **1** par l'élément d'entraînement **2.**

Cet élément anti-retour **6** peut être un frein exerçant une force de frottement calibrée de manière à ce qu'un déplacement de l'élément mobile **1** par la dent d'entraînement dans le sens de déplacement est possible alors qu'un déplacement de l'élément mobile **1** dans le sens contraire est empêché. Le frein se situe par exemple sur l'axe d'un rotor constituant l'élément mobile.

L'élément anti-retour peut également être un élément à doigt anti-retour. Dans ce cas, l'élément anti-retour **6** peut comprendre une poutre **63** munie d'une dent **61** anti-retour. La dent anti-retour **61** est placée entre deux dents et est adaptée pour glisser sur les dents **11** quand ceux-ci se déplacent dans le sens de déplacement de l'élément mobile **1** et pour bloquer les dents **11** quand ceux-ci se déplacent dans le sens contraire au sens de déplacement de l'élément mobile **1.**

Une telle conception de l'élément anti-retour **6** est bien connue de l'homme du métier et ne sera pas décrite en détail ici.

### Dispositif avec structure à peignes interdigités.

Un premier exemple est décrit ci-après en référence à la figure 1.

Cet exemple de dispositif comprend un élément actionneur du type de celui décrit dans le document FR 2 874 907.

L'élément actionneur **3** comprend une partie fixe et une partie mobile. Les parties fixe et mobile forment ensemble une structure à peignes interdigités (connue sous l'appellation anglo-saxonne de « comb drive »).

La structure à peignes interdigités comprend typiquement deux peignes dont les dents sont séparées d'une seule distance supérieure à leur épaisseur. Les dents d'un premier peigne sont placées entre les dents du deuxième peigne.

Lorsqu'une tension est appliquée entre les deux peignes, des forces électrostatiques sont générées tendant à approcher les dents d'un peigne à celles de l'autre peigne par l'interpénétration des dents d'un peigne entre celles de l'autre, ce qui entraîne une augmentation du recouvrement des dents des deux peignes. Lorsque l'un des peignes est fixe l'autre est mis en mouvement.

L'élément d'entraînement **2** comprend une poutre **23** dont une extrémité est reliée à la partie mobile de la structure à peignes interdigités **3,** et dont l'autre extrémité est reliée à une dent **21** d'entraînement. Lors de la phase d'entraînement, la dent **21** d'entraînement est placée entre deux dents **11** de l'élément mobile **1.** Lorsque la partie mobile de la structure à peignes interdigités **3** se déplace, celle-ci déplace également la dent **21** d'entraînement suivant la direction et le sens de déplacement de l'élément mobile **1.** La dent **21** d'entraînement pousse ou tracte alors l'élément mobile **1** via l'une des dents **11** entre lesquelles la dent **21** d'entraînement est située.

L'élément d'entraînement **2** peut être relié à la partie mobile de l'élément actionneur **3.** Ainsi quand la partie mobile est mise en mouvement, l'élément d'entraînement **2** est également mis en mouvement.

L'élément indexeur **4** peut comprendre deux poutres **43, 45.** Une première poutre **43** comprend une première extrémité libre et une deuxième extrémité reliée à l'élément actionneur **3,** par exemple par la partie mobile.

Une deuxième poutre **45** comprend une première extrémité libre et une deuxième extrémité reliée à un châssis **9** fixe du dispositif.

Les première et deuxième poutres **43, 45** sont reliées entre elles par leur extrémité libre.

Ainsi un déplacement de la première poutre **43** entrainée par l'élément actionneur **3** provoque une flexion de la deuxième poutre **45,** ce qui a pour effet de déplacer le doigt d'indexage **41** par rapport à l'élément mobile **1.**

Au début de la phase d'entraînement, le doigt d'indexage **41** de l'élément indexeur **4** est placé dans un espace entre deux dents **11** de l'élément mobile **1.** Lors de la phase d'entraînement, le doigt d'indexage **41** de l'élément indexeur **4** est déplacé par l'élément actionneur **3** hors de l'espace entre les deux dents **11** de l'élément mobile **1** pour permettre la mise en mouvement de l'élément mobile **1.**

Suit ensuite la phase de retour, pendant laquelle le doigt d'indexage **41** est positionné par l'élément actionneur **3** dans un autre espace entre deux autres dents de l'élément mobile **1.**

De manière générale, si les dents **11** de l'élément mobile **1** sont numérotées **11₁**, **11₂**, ... **11ᵢ, 11ᵢ₊₁**, **11ᵢ₊₂**..., et qu'au début de la phase d'entraînement, le doigt d'indexage **41** est placé dans l'espace entre les dents **11ᵢ₊₁** et **11**_{**i+2**,} alors celui-ci est déplacé hors de ces dents, pour ensuite, lors de la phase de retour être placé dans l'espace entre les dents **11ᵢ₊₂** et **11ᵢ₊₃**.

### Fonctionnement du dispositif à un seul élément indexeur avec structure à peignes interdigités

Le fonctionnement du dispositif à un seul élément indexeur avec structure à peignes interdigités est décrit ci-après en référence aux figures 1 à 5.

Le fonctionnement du dispositif est ici illustré avec un dispositif comprenant une roue dentée comme élément mobile **1.** La position initiale est comprise comme la position dans laquelle il n'y a pas de tension électrique appliquée entre les peignes interdigités de l'élément actionneur **3.** Le sens de déplacement de l'élément mobile **1** est indiqué par la flèche **F.**

Dans la position initiale illustrée par la figure 1, puisque aucune tension n'est appliquée entre les peignes interdigités de l'élément actionneur **3,** la partie mobile de l'élément actionneur **3** est dans un état de repos.

Dans cet état de repos, la dent **21** d'entraînement de l'élément d'entraînement **2** est positionnée dans l'espace situé entre les deux dents **11ᵢ** et **11ᵢ₊₁** de l'élément mobile **1.**

Le doigt d'indexage **41** de l'élément indexeur **4** est positionné dans l'espace situé entre les deux dents **11ᵢ₊₁** et **11ᵢ₊₂.** Le doigt d'indexage **41** empêche l'élément mobile **1** de se déplacer de manière non contrôlée dans le sens de la flèche **F** et dans le sens opposé lorsque l'élément actionneur **3** est au repos, par exemple lors d'un choc reçu par le dispositif.

La dent **61** anti-retour de l'élément anti-retour **6** est positionnée dans l'espace situé entre les dents **11ᵢ₊₂** et **11ᵢ₊₃** de l'élément mobile **1.**

Lors de la phase d'entraînement, la partie mobile de l'élément actionneur **3** est déplacée dans le sens de la flèche **F.** L'élément d'entraînement **2** étant relié directement à la partie mobile de l'élément actionneur **3,** il se déplace également dans le sens de la flèche **F** et vient au contact de la dent **11ᵢ** de l'élément mobile **1** comme le montre la figure 2. Pendant ce temps, la deuxième poutre **45** de l'élément indexeur **4** commence à se courber soulevant ainsi le doigt d'indexage **41.**

Sur la figure 3, la partie mobile de l'élément actionneur **3** se déplace davantage dans le sens de la flèche **F** provoquant le déplacement du doigt d'indexage **41** de l'élément indexeur **4** hors des dents **11ᵢ₊₁** et **11ᵢ₊₂** de l'élément mobile **1** permettant la mise en mouvement de l'élément mobile **1.** En effet, lorsque la partie mobile de l'élément actionneur **3** se déplace davantage, celui-ci tire sur la première poutre **43** de l'élément indexeur **4** qui est liée de manière fixe à la deuxième poutre **45** de l'élément indexeur **4** provoquant alors la courbure de la deuxième poutre **45** loin des dents **11** de l'élément mobile **1.**

Le déplacement de la partie mobile de l'élément actionneur **3** occasionne également l'entraînement de l'élément mobile **1** par la poussée ou la traction exercée par la dent **21** d'entraînement de l'élément d'entraînement **2** sur la dent **11ᵢ** de l'élément mobile **1.** Entre temps, la dent **11ᵢ₊₃** de l'élément mobile **1** glisse sous la dent **61** anti-retour de l'élément anti-retour **6.**

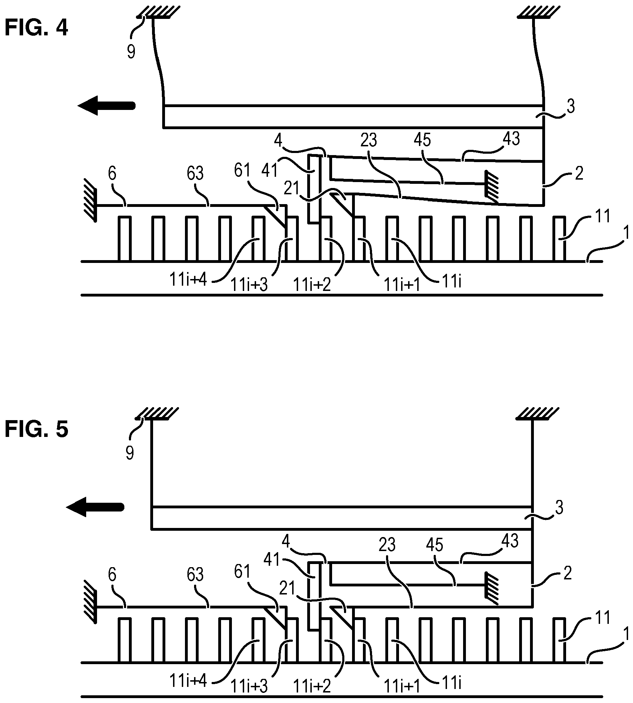

Lors de la phase de retour (figure 4), il n'y a plus de tension appliquée entre les peignes interdigités de l'élément actionneur **3,** la partie mobile de l'élément actionneur **3** revient à sa position de départ.

Lorsque la partie mobile de l'élément actionneur **3** revient à sa position de départ, le doigt d'indexage **41** de l'élément indexeur **4** vient se positionner dans l'espace situé entre les dents **11ᵢ₊₂** et **11ᵢ₊₃** de l'élément mobile **1.** En même temps, la dent **21** d'entraînement de l'élément d'entraînement **2** glisse sur la dent **11ᵢ₊₁**, alors que le doigt **61** anti-retour empêche un mouvement de l'élément mobile **1** dans le sens contraire au sens de la flèche **F** par butée avec la dent **11ᵢ₊₃**.

À la fin de la phase de retour (figure 5), tous les éléments du dispositif se retrouvent à la même position qu'à la position initiale (figure 1) avec une incrémentation des dents de l'élément mobile **1** de 1.

### Dispositif à un seul élément indexeur avec plaque fixée sur support déformable

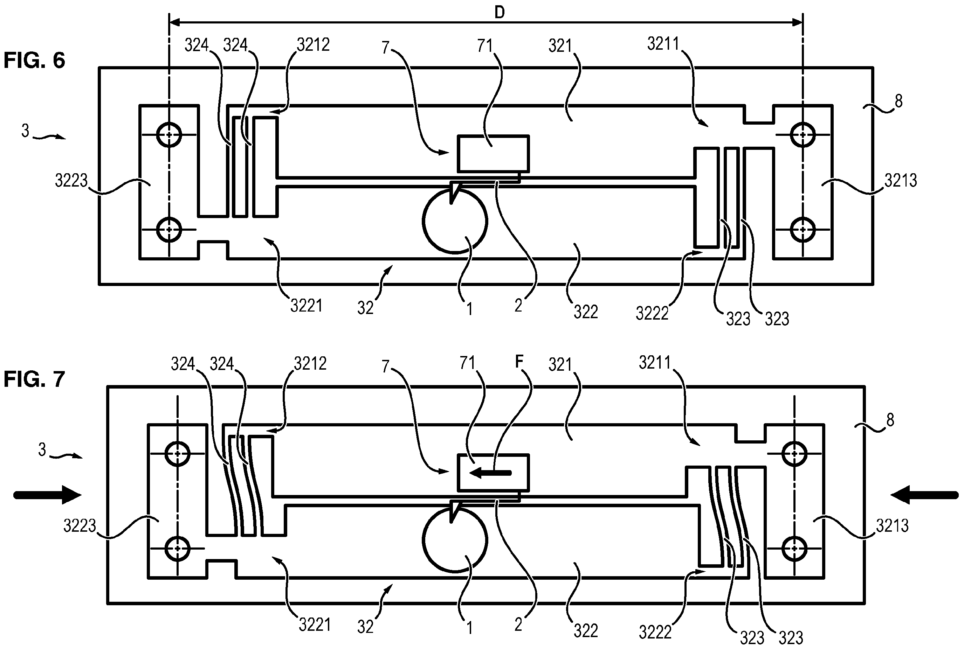

Un deuxième exemple est décrit ci-après en référence aux figures 6 à 10.

Dans cet exemple, l'élément actionneur **3** est une plaque **32** fixée sur un support **8** déformable. La plaque **32** suit les déformations appliquées et subies par le support **8** déformable. La plaque **32** comporte un centre de symétrie. La plaque **32** comprend deux lames **321, 322** s'étendant longitudinalement et reliées entre elles par au moins deux traverses **323, 324** flexibles (quatre dans les figures 6 à 10) disposées de part et d'autre du centre de symétrie de la plaque **32.** Chacune des deux lames **321, 322** est en outre fixée sur le support **8** déformable par un élément de fixation **3213, 3223** disposé à l'une de ses extrémités.

Pour les raisons de description, l'extrémité (voire la zone avoisinante) la plus proche de l'élément de fixation sera dénommée ci-après l'extrémité proximale **3211, 3221.** Pareillement, l'extrémité (voire la zone avoisinante) la plus éloignée de l'élément de fixation sera dénommée ci-après l'extrémité distale **3212, 3222.**

Les deux lames **321, 322** sont reliées entre elles par les quatre traverses **323, 324** flexibles de manière à ce qu'une paire de traverses **323,** relie l'extrémité proximale **3211** d'une première lame **321** à l'extrémité distale **3222** de la deuxième lame **322** et une autre paire de traverses **324** relie l'extrémité distale **3212** de la première lame **321** à l'extrémité proximale **3221** de la deuxième lame **322.** La plaque **32** forme alors un oscillateur mécanique qui réagit aux déformations en compression, traction ou flexion du support **8.**

Lorsque qu'une déformation en compression ou en traction parallèlement à l'extension de la plaque **32** est appliquée sur le support **8** déformable, la plaque **32** subit également la déformation en compression ou en traction et les deux lames **321, 322** sont déplacées l'une par rapport à l'autre en translation le long d'une direction de déplacement parallèle à leur extension longitudinale. Si la déformation appliquée est une compression, les deux lames **321, 322** sont déplacées de manière à ce que leurs extrémités distales **3212, 3222** s'éloignent l'une de l'autre. Inversement, si la déformation appliquée est une traction, les deux lames **321, 322** sont déplacées de manière à ce que leurs extrémités distales **3212, 3222** se rapprochent l'une de l'autre.

L'amplitude du déplacement relatif d'une lame **321** par rapport à l'autre **322** dépend de la distance **D** séparant les éléments de fixation **3213** et **3223** l'une de l'autre.

Dans cette variante, une base d'actionnement **7** est montée mobile sur la première lame **321** et l'élément mobile **1** est montée à rotation sur la deuxième lame **322.**

La base d'actionnement **7** se compose d'une base **71,** de l'élément d'actionnement **2** et de l'élément indexeur **4.**

L'élément d'actionnement **2** comprend une poutre **23** qui s'étend parallèlement à la direction de déplacement des lames et présente à son extrémité libre une dent **21** d'entraînement.

L'élément indexeur **4** comprend une première poutre **43** qui s'étend parallèlement à la direction de déplacement des lames et présente à son extrémité libre un doigt d'indexage **41.** Une deuxième poutre **45** s'étend parallèlement à la direction de déplacement des lames à partir de l'extrémité libre de la première poutre **43** et en sens contraire et porte sur son extrémité libre une surface de contact **47.**

La deuxième lame **322** comprend une butée **3225** que contacte la surface de contact **47** lorsque les deux lames **321, 322** sont mises en mouvement l'une par rapport à l'autre. La distance séparant la surface de contact **47** et la butée **3225** dans la position de repos du dispositif est choisie, par rapport à l'espace entre les dents **11** de l'élément mobile **1,** la largeur du doigt indexeur **41** et le jeu initial entre la dent d'entraînement **21** et la dent à entraîner de l'élément mobile **1,** de manière à ce que le déplacement du doit indexeur **41** hors de l'espace séparant deux dents **11** de l'élément mobile **1** se réalise avant que la dent d'entraînement **21** n'ait déplacé l'élément mobile **1** d'un pas complet.

Le dispositif peut encore comprendre un élément anti-retour (non représenté).

Ce dispositif est avantageusement utilisé pour la surveillance de structure subissant des efforts de compression, traction et/ou flexion.

Par exemple, ce dispositif peut être fixé sur un pilier de pont, le pilier formant alors le support **8.** Le pas des dents **11** de l'élément mobile **1** est choisi de manière à permettre une surveillance des déformations en compression subies par le pilier (et donc par le pont) d'une amplitude donnée. Par exemple, si le pas des dents **11** de l'élément mobile **1** est de 10 µm, la déformation minimale que l'on peut détecter a une amplitude de 10 µm. Lorsqu'une charge est appliquée sur le pont (passage de véhicules), le pilier subit une déformation en compression. Quand cette charge est suffisamment élevée pour déformer le pilier en compression d'au moins 10 µm alors l'élément actionneur **3** agit sur l'élément mobile **1** via l'élément d'actionnement **2** pour déplacer l'élément mobile **1** d'un pas de 10 µm.

Autre exemple, ce dispositif peut être fixé sur un câble de grue sollicité en traction, le câble formant le support **8.** Le pas des dents **11** de l'élément mobile **1** est choisi de manière à permettre une surveillance des déformations en traction subies par le câble d'une amplitude donnée. Par exemple, si le pas des dents **11** de l'élément mobile **1** est de 30 µm, la déformation minimale que l'on peut détecter a une amplitude de 30 µm. Lorsqu'une charge est attachée au bout du câble de grue, le câble subit une déformation en traction. Quand cette charge est suffisamment élevée pour déformer le câble en traction d'au moins 30 µm alors l'élément actionneur **3** agit sur l'élément mobile **1** via l'élément d'actionnement **2** pour déplacer l'élément mobile **1** d'un pas de 30 µm.

### Fonctionnement du dispositif à un seul élément indexeur avec plaque fixée sur support déformable

Le fonctionnement du dispositif à un seul élément indexeur avec plaque fixée sur support déformable est décrit ci-après en référence aux figures 6 à 10.

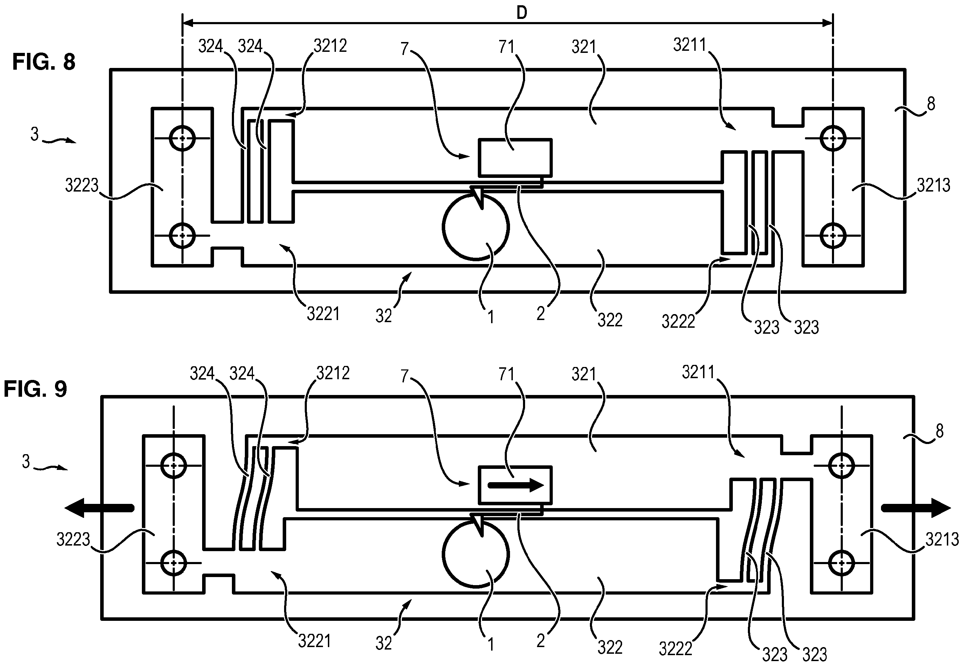

Dans une première variante, le dispositif est configuré pour surveiller la déformation en traction du support **8** (voir figures 8, 9 et 10).

Le fonctionnement du dispositif est ici illustré avec un dispositif comprenant une roue dentée comme élément mobile **1.** La position initiale est comprise comme la position dans laquelle il n'y a pas de déformation générée sur le support déformable. Le sens de déplacement de l'élément mobile **1** est indiqué par la flèche **F.**

Dans la position initiale, puisque aucune déformation n'est générée sur le support déformable, les traverses flexibles **323, 324** de l'élément actionneur **3** sont dans un état de repos.

Dans cet état de repos, la dent **21** d'entraînement de l'élément d'entraînement **2** est positionnée dans l'espace situé entre les deux dents **11ᵢ** et **11ᵢ₊₁** de l'élément mobile **1.**

Le doigt d'indexage **41** de l'élément indexeur **4** est positionné dans l'espace situé entre les deux dents **11ᵢ₊₁** et **11ᵢ₊₂.** Le doigt d'indexage **41** empêche l'élément mobile **1** de se déplacer de manière non contrôlée dans le sens de la flèche **F** et dans le sens opposé, par exemple lors d'un choc reçu par le dispositif.

La dent anti-retour de l'élément anti-retour (non représenté sur les dessins) est positionnée dans un autre espace situé entre deux dents de l'élément mobile **1.**

Lors de la phase d'entraînement, une force de traction est appliquée sur le support **8** déformable. La direction de la force de traction est suivant la direction de déplacement des lames. Les deux lames **321, 322** se déplacent l'une par rapport à l'autre de manière à ce que leurs extrémités distales **3212, 3222** se rapprochent l'une de l'autre.

Le résultat de ce mouvement relatif est le déplacement de la base **71** dans le sens de la flèche **F.** L'élément d'entraînement **2** étant relié directement à la base **71,** il se déplace également dans le sens de la flèche **F** et vient au contact de la dent **11ᵢ** de l'élément mobile **1.** Le déplacement de l'élément d'entraînement **2** occasionne ensuite l'entraînement de l'élément mobile **1** par la poussée ou la traction exercée par la dent **21** d'entraînement de l'élément d'entraînement **2** sur la dent **11ᵢ** de l'élément mobile **1.** L'amplitude du déplacement de la base **71** et de l'élément mobile **1** dépend à la fois de la déformation du support **8** et de la distance **D** séparant les deux éléments de fixation **3213, 3223.**

Pendant ce temps, la surface de contact **47** de l'élément indexeur **4** se déplace en direction de la butée **3225** jusqu'à y avoir contact. La butée **3225** restreint alors le déplacement de la surface de contact **47,** c'est-à-dire de l'extrémité libre de la deuxième poutre **45** de l'élément indexeur **4.** Les première et deuxième poutres **43, 45** de l'élément indexeur **4** se déforment alors en se courbant et soulèvent ainsi le doigt d'indexage **41** hors de l'espace entre les dents **11ᵢ₊₁** et **11ᵢ₊₂** de l'élément mobile **1.**

En même temps, si l'élément anti-retour comprend une dent anti-retour, une dent de l'élément mobile **1** glisse sous la dent anti-retour de l'élément anti-retour. Lors de la phase de retour, la force de traction sur le support **8** déformable est supprimée. Les deux lames **321, 322** se déplacent alors l'une par rapport à l'autre de manière à ce que leurs extrémités distales **3212, 3222** s'éloignent l'une de l'autre pour revenir à la position de repos.

Le résultat de ce mouvement relatif est le déplacement de la base **71** dans le sens contraire à celui de la flèche **F.** L'élément d'entraînement **2** étant relié directement à la base **71,** il se déplace également dans le sens contraire à celui de la flèche **F** et vient au contact de la dent **11ᵢ₊₁** de l'élément mobile **1,** glisse par-dessus celle-ci pour se positionner entre les dents **11ᵢ₊₁** et **11₁₊₂**.

Pendant ce temps, les première et deuxième poutres **43, 45** de l'élément indexeur **4** reviennent en position de repos diminuant leur courbure, ce qui provoque l'abaissement du doigt d'indexage **41** et son insertion entre deux nouvelles dents de l'élément mobile **1.** Le retour à leur forme linéaire coïncide avec la mise hors contact de la surface de contact **47** de la butée **3225.** Lorsque les poutres **43, 45** de l'élément indexeur **4** sont revenus à leur position de repos, le doigt d'indexage **41** est disposée entre deux nouvelles dents de l'élément mobile **1.** L'élément indexeur **4** continue sa course parallèlement à la direction de déplacement des lames, jusqu'à atteindre la position de repos du dispositif à la fin de la phase de retour.

L'élément anti-retour empêche un mouvement de l'élément mobile **1** dans le sens contraire au sens de la flèche **F** par butée avec une dent de l'élément mobile **1.** A la fin de la phase de retour, tous les éléments du dispositif se retrouvent à la même position qu'à la position initiale avec une incrémentation des dents de l'élément mobile **1** de 1.

Une deuxième variante est possible pour surveiller la déformation en compression du support **8** (voir figures 6 et 7). L'homme du métier saura alors adapter la description ci-dessus, et notamment la position des différents éléments et leur géométrie pour l'entraînement d'un élément mobile **1,** notamment la géométrie de la dent d'actionnement.

Par ailleurs, la présente invention ne se limite pas à ces deux variantes décrites ci-dessus. En effet, l'homme du métier saura adapter la description pour permettre la surveillance de déformation en flexion du support **8** de manière à ce qu'une telle déformation génère un déplacement de l'élément mobile **1.**

### Dispositif avec deux éléments indexeurs

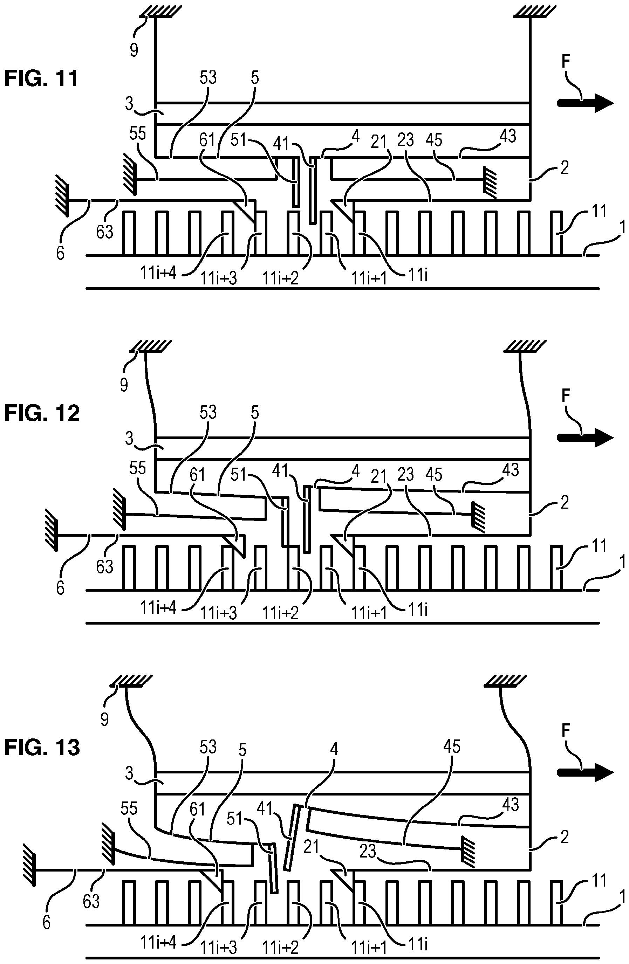

Le dispositif à deux éléments indexeurs est identique au dispositif à un seul élément indexeur avec structure à peignes interdigités décrit ci-dessus. Les éléments additionnels sont décrits ci-après en référence à la figure 11.

Ce dispositif à deux éléments indexeurs comprend en outre un deuxième élément indexeur **5** comportant un deuxième doigt **51** d'indexage destiné à être positionné par intermittence entre deux dents **11** de l'élément mobile, pour éviter un mouvement non-contrôlé par l'élément d'entraînement **2** de l'élément mobile **1** dans le sens de son déplacement lors de la phase de déplacement. Le deuxième doigt **51** d'indexage du deuxième élément indexeur **5** est déplacé en opposition de phase par rapport au premier doigt **41** d'indexage du premier élément indexeur **4.**

Au début de la phase d'entraînement, le deuxième doigt **51** d'indexage est placé hors des dents **11** de l'élément mobile **1.** Pendant la phase d'entraînement, le deuxième doigt **51** d'indexage est déplacé pour être positionné dans l'espace entre deux dents **11** de l'élément mobile **1,** par exemple dans l'espace entre les deux autres dents **11** de l'élément mobile **1** dans lequel sera positionné le premier doigt **41** d'indexage lors de la phase de retour.

Lors de la phase de retour, le deuxième doigt **51** d'indexage est déplacé hors de l'espace entre les deux dents **11** de l'élément mobile **1,** et de manière préférentielle le deuxième doigt **51** d'indexage laisse la place au premier doigt **41** d'indexage.

Le deuxième élément indexeur **5** peut être relié à l'élément actionneur **3** de sorte que l'élément actionneur **3** déplace simultanément l'élément d'entraînement **2** et le deuxième doigt **51** d'indexage.

Le deuxième élément indexeur **5** peut, par exemple, être relié à la partie mobile de l'élément actionneur **3.** Ainsi quand la partie mobile est mise en mouvement, l'élément d'entraînement **2,** le premier élément indexeur **4** et le deuxième élément indexeur **5** sont mis simultanément en mouvement.

Le deuxième indexeur **5** peut comprendre deux poutres **53, 55.** Une première poutre **53** comprend une première extrémité libre et une deuxième extrémité reliée à l'élément actionneur **3,** par exemple par la partie mobile.

Une deuxième poutre **55** comprend une première extrémité libre et une deuxième extrémité reliée au châssis **9** fixe du dispositif.

Les première et deuxième poutres **53, 55** sont reliées entre elles par leur extrémité libre.

Ainsi un déplacement de la première poutre **53** entrainée par l'élément actionneur **3** provoque une flexion de la deuxième poutre **55,** ce qui a pour effet de déplacer le deuxième doigt **51** d'indexage par rapport à l'élément mobile **1.**

### Fonctionnement du dispositif à deux éléments indexeurs

Le fonctionnement du dispositif à deux éléments indexeurs est décrit ci-après en référence aux figures 11 à 15.

Le fonctionnement du dispositif est ici illustré avec un dispositif comprenant une roue dentée comme élément mobile **1** et une structure à peignes interdigités comme élément actionneur **3.** La position initiale est comprise comme la position dans laquelle il n'y a pas de tension appliquée entre les peignes interdigités de l'élément actionneur **3.** Le sens de déplacement de l'élément mobile **1** est indiqué par la flèche **F** et dans le sens contraire lorsque l'élément actionneur **3** est au repos.

Dans la position initiale illustrée par la figure 11, puisque aucune tension n'est appliquée entre les peignes interdigités de l'élément actionneur **3,** la partie mobile de l'élément actionneur **3** est dans un état de repos.

Dans cet état de repos, la dent **21** d'entraînement de l'élément d'entraînement **2** est positionnée dans l'espace situé entre les deux dents **11ᵢ** et **11ᵢ₊₁** de l'élément mobile **1.**

Le premier doigt **41** d'indexage du premier élément indexeur **4** est positionné dans l'espace situé entre les deux dents **11ᵢ₊₁** et **11ᵢ₊₂**. Le premier doigt **41** d'indexage empêche l'élément mobile **1** de se déplacer de manière non contrôlée dans le sens de la flèche **F.**

Le deuxième doigt **51** d'indexage du deuxième élément indexeur **5** est positionné hors des dents **11** de l'élément mobile **1.**

La dent anti-retour **61** de l'élément anti-retour **6** est positionnée dans l'espace situé entre les dents **11ᵢ₊₃** et **11ᵢ₊₄** de l'élément mobile **1.**

Lors de la phase d'entraînement, la partie mobile de l'élément actionneur **3** est déplacée dans le sens de la flèche **F.** L'élément d'entraînement **2** étant relié directement à la partie mobile de l'élément actionneur **3,** il se déplace également dans le sens de la flèche **F** et vient au contact de la dent **11ᵢ** de l'élément mobile **1** comme le montre la figure 12. Pendant ce temps, la deuxième poutre **45** du premier élément indexeur **4** commence à se courber soulevant ainsi le premier doigt **41** d'indexage.

Sur la figure 13, la partie mobile de l'élément actionneur **3** se déplace davantage dans le sens de la flèche **F** provoquant le déplacement du premier doigt **41** d'indexation du premier élément indexeur **4** hors des dents **11ᵢ₊₁** et **11ᵢ₊₂** de l'élément mobile **1** permettant la mise en mouvement de l'élément mobile **1.**

Pendant ce temps, le déplacement de la partie mobile de l'élément actionneur **3** dans le sens de la flèche **F** provoque également le déplacement du deuxième doigt **51** d'indexation du deuxième élément indexeur **5** pour le placer entre les dents **11ᵢ₊₂** et **11ᵢ₊₃**. Le deuxième doigt **51** d'indexation permet de contrôler la rotation de l'élément mobile **1** en n'autorisant le déplacement de ce dernier que d'un seul cran dans le sens de la flèche **F.** Si l'élément mobile **1** a tendance à se déplacer davantage, le deuxième doit **51** d'indexation vient en butée contre la dent **11ᵢ₊₃**.

Les déplacements des premier et deuxième doigts **41** et **51** d'indexation sont en opposition de phase. Ceci est rendu possible dans l'exemple illustré par les figures 11 à 15 grâce à la fixation directe de la première poutre **43** du premier élément indexeur **4** à la partie mobile de l'élément actionneur **3** sur un bord situé sur le même côté que la pointe de la flèche **F,** à la fixation directe de la première poutre **53** du deuxième élément indexeur **5** à la partie mobile de l'élément actionneur **3** sur un bord positionné sur le côté opposé à la pointe de la flèche **F,** et à la liaison fixe des deuxièmes poutres **45** et **55** au châssis **9** et aux premières poutres **43** et **53** respectives.

Ainsi, quand la partie mobile de l'élément actionneur **3** se déplace selon le sens de la flèche **F,** elle entraîne les premières poutres **43** et **53** dans son mouvement. Les poutres des éléments indexeurs **4** et **5,** se courbent alors en raison des moments de flexions générés par les bras de levier reliant les poutres **43, 45** et **53, 55** :
- les poutres du premier élément indexeur **4** loin des dents **11** de l'élément mobile **1** ; et
- les poutres du deuxième élément indexeur **5** vers les dents **11** de l'élément mobile **1.**

Le déplacement de la partie mobile de l'élément actionneur **3** occasionne également l'entraînement de l'élément mobile **1** par la poussée ou la traction exercée par la dent **21** d'entraînement de l'élément d'entraînement **2** sur la dent **11ᵢ** de l'élément mobile **1.** Entre temps, la dent **11ᵢ₊₄** de l'élément mobile **1** glisse sous la dent **61** anti-retour de l'élément anti-retour **6.**

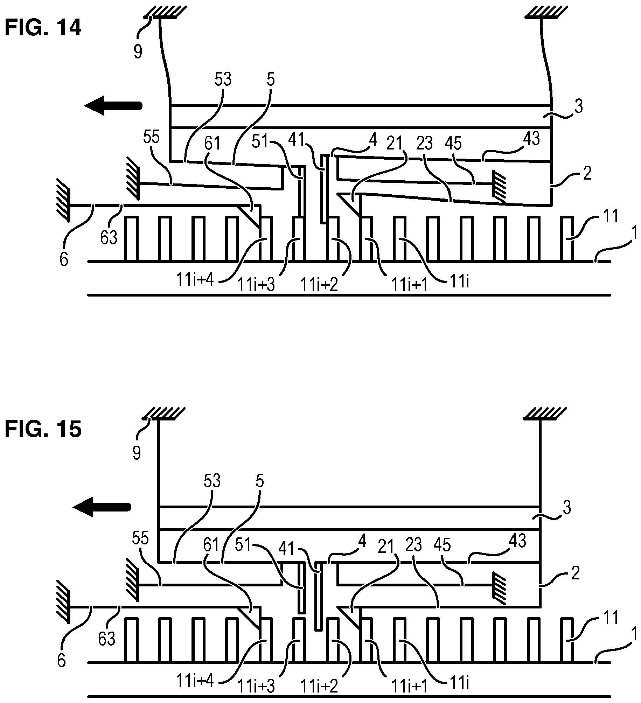

Lors de la phase de retour (figure 14), il n'y a plus de tension appliquée entre les peignes interdigités de l'élément actionneur **3,** la partie mobile de l'élément actionneur **3** revient à sa position de départ.

Lorsque la partie mobile de l'élément actionneur **3** revient à sa position de départ, le premier doigt **41** d'indexage du premier élément indexeur **4** vient se positionner dans l'espace situé entre les dents **11ᵢ₊₂** et **11ᵢ₊₃** de l'élément mobile **1.** En même temps, la dent **21** d'entraînement de l'élément d'entraînement **2** glisse sur la dent **11ᵢ₊₁**, et le deuxième doit **51** d'indexage du deuxième élément indexeur **5** est déplacé loin des dents **11** de l'élément mobile **1,** alors que le doigt **61** anti-retour empêche un mouvement de l'élément mobile **1** dans le sens contraire au sens de la flèche **F** par butée avec la dent **11**_{**i+4**.}

A la fin de la phase de retour (figure 15), tous les éléments du dispositif se retrouvent à la même position qu'à la position initiale (figure 11) avec une incrémentation des dents de l'élément mobile **1** de 1.

## Revendications

1. Dispositif comprenant :
- un élément mobile (1) comportant des dents (11 ; 11ᵢ, 11ᵢ₊₁, 11 ᵢ₊₂, 11ᵢ₊₃, 11ᵢ₊₄) et destiné à être mis en mouvement ;
- un élément d'entraînement (2) destiné à venir en prise avec les dents (11 ; 11ᵢ, 11ᵢ₊₁, 11ᵢ₊₂, 11ᵢ₊₃, 11ᵢ₊₄) de l'élément mobile (1) pour mettre en mouvement l'élément mobile (1) dans un sens de déplacement ;
- un élément actionneur (3) apte à générer un mouvement alternatif pour déplacer l'élément d'entraînement (2) suivant au moins deux phases, une phase d'entraînement et une phase de retour,
lors de la phase d'entraînement, l'élément d'entraînement (2) est en prise avec au moins une dent (11 ; 11ᵢ, 11ᵢ₊₁, 11ᵢ₊₂, 11ᵢ₊₃, 11ᵢ₊₄) de l'élément mobile (1) pour pousser ou tracter l'élément mobile (1),
lors de la phase de retour sans entraînement, l'élément d'entraînement (2) est décalé par rapport à l'élément mobile (1) pour être mis en prise avec au moins une autre dent (11 ; 11ᵢ, 11ᵢ₊₁, 11ᵢ₊₂, 11ᵢ₊₃, 11ᵢ₊₄) de l'élément mobile (1),
- un premier élément indexeur (4) comprenant un premier doigt (41) d'indexage destiné à être positionné par intermittence dans un espace compris entre deux dents (11 ; 11ᵢ, 11ᵢ₊₁, 11ᵢ₊₂, 11ᵢ₊₃, 11ᵢ₊₄) de l'élément mobile (1) pour empêcher un déplacement non-contrôlé par l'élément d'entraînement dans le sens de déplacement de l'élément mobile (1) ou dans le sens contraire ;
**caractérisé en ce que**
le premier élément indexeur (4) est relié à l'élément actionneur (3) de sorte que l'élément actionneur (3) déplace simultanément l'élément d'entraînement (2) et le premier doigt d'indexage (41),
l'élément actionneur (3) comprend une partie fixe et une partie mobile par rapport à la partie fixe, l'élément d'entraînement (2) et l'élément indexeur (4) étant reliés à la partie mobile, et
le premier élément indexeur (4) comprend :
- une première poutre (43) comprenant une première extrémité libre et une deuxième extrémité reliée à l'élément actionneur (3) ; et
- une deuxième poutre (45) comprenant une première extrémité libre et une extrémité reliée à un châssis (9) fixe du dispositif ;
la première poutre (43) et la deuxième poutre (45) étant reliées entre elles par leurs extrémités libres respectives de sorte qu'un déplacement de la première poutre (43) entrainé par l'élément actionneur (3) provoque une flexion de la deuxième poutre (45), ce qui a pour effet de déplacer le premier doigt (41) d'indexage par rapport à l'élément mobile (1).

2. Dispositif selon la revendication 1, dans lequel le premier doigt (41) d'indexage et l'élément actionneur (3) sont configurés de manière à ce que :
lors de la phase d'entraînement, le premier doigt (41) d'indexage est déplacé par l'élément actionneur (3) hors de l'espace entre les deux dents (11 ; 11ᵢ, 11ᵢ₊₁, 11ᵢ₊₂, 11ᵢ₊₃, 11ᵢ₊₄) de l'élément mobile (1) ; et
lors de la phase de retour, le premier doigt (41) d'indexage est positionné par l'élément actionneur (3) dans un autre espace entre deux autres dents (11 ; 11ᵢ, 11ᵢ₊₁, 11ᵢ₊₂, 11ᵢ₊₃, 11ᵢ₊₄) de l'élément mobile (1).

3. Dispositif selon l'une des revendications 1 et 2, comprenant en outre un deuxième élément indexeur (5) comportant un deuxième doigt (51) d'indexage destiné à être positionné par intermittence entre deux dents (11 ; 11ᵢ, 11ᵢ₊₁, 11ᵢ₊₂, 11ᵢ₊₃, 11ᵢ₊₄) de l'élément mobile (1), le deuxième doigt (51) d'indexage étant déplacé en opposition de phase avec le premier doigt (41) d'indexage.

4. Dispositif selon la revendication 3, dans lequel le deuxième doigt (51) d'indexage et l'élément actionneur (3) sont configurés de manière à ce que :
lors de la phase d'entraînement, le deuxième doigt (51) d'indexage est positionné dans l'espace entre les deux autres dents (11 ; 11ᵢ, 11ᵢ₊₁, 11ᵢ₊₂, 11ᵢ₊₃, 11ᵢ₊₄) de l'élément mobile (1), dans lequel sera positionné le premier doigt (41) d'indexage lors de la phase de retour ; et
lors de la phase de retour, le deuxième doigt (51) d'indexage est déplacé hors de l'espace entre les deux dents (11 ; 11ᵢ, 11ᵢ₊₁, 11ᵢ₊₂, 11ᵢ₊₃, 11ᵢ₊₄) de l'élément mobile (1).

5. Dispositif selon l'une des revendications 3 ou 4, dans lequel le deuxième élément indexeur (5) est également relié à l'élément actionneur (3) de sorte que l'élément actionneur (3) déplace simultanément l'élément d'entraînement (2) et le deuxième doigt d'indexage (5).

6. Dispositif selon l'une des revendications 3 à 5, dans lequel le deuxième élément indexeur (5) comprend :
- une première poutre (53) comprenant une première extrémité libre et une deuxième extrémité reliée à l'élément actionneur (3) ; et
- une deuxième poutre (55) comprenant une première extrémité libre et une extrémité reliée au châssis (9) fixe du dispositif ;
la première poutre (53) et la deuxième poutre (55) étant reliées entre elles par leurs extrémités libres de sorte qu'un déplacement de la première poutre (53) entrainé par l'élément actionneur (3) provoque une flexion de la deuxième poutre (55), ce qui a pour effet de déplacer le deuxième doigt (51) d'indexage par rapport à l'élément mobile (1).

7. Dispositif selon la revendication 1 ou 2, dans lequel l'élément actionneur (3) comprend une plaque (32) s'étendant suivant une direction longitudinale à fixer sur un support (8),
dans lequel la plaque (32) comprend deux lames (321, 322) reliées entre elles par au moins deux traverses flexibles (323, 324) et à fixer sur le support de sorte qu'une déformation en compression ou en traction du support (8) génère un déplacement d'une lame par rapport à l'autre dans une direction de déplacement parallèle à la direction longitudinale de la plaque (32).

8. Dispositif selon la revendication 7, dans lequel chacune des lames (321, 322) comprend une extrémité proximale (3211, 3221) et une extrémité distale (3212, 3222),
dans lequel chacune des lames (321, 322) comprend à son extrémité proximale (3211, 3221) un élément de fixation (3213, 3223) pour la fixation au support (8), et
dans lequel une traverse flexible (323, 324) relie l'extrémité distale (3212, 3222) d'une lame (321, 322) à l'extrémité proximale (3221, 3211) de l'autre lame (322, 321).

9. Dispositif selon la revendication 7 ou 8, comprenant en outre une base d'actionnement (7) fixée sur une des lames (321), l'élément mobile (1) étant fixé à rotation sur l'autre lame (322) de la plaque,
dans lequel la base d'actionnement (7) comprend une base (71), l'élément actionneur (3) et l'élément indexeur (4).

10. Dispositif selon la revendication 9, dans lequel l'élément actionneur (3) comprend une poutre (23) qui s'étend parallèlement à la direction de déplacement des lames et présente à son extrémité libre une dent (21) d'entraînement,
dans lequel l'élément indexeur (4) comprend une première poutre (43) s'étendant parallèlement à la direction de déplacement des lames et présentant à son extrémité libre un doigt d'indexage (41),et une deuxième poutre (45) s'étendant parallèlement à la direction de déplacement des lames à partir de l'extrémité libre de la première poutre (43) et en sens contraire, et portant à son extrémité libre une surface de contact (47),
dans lequel la deuxième lame (322) comprend une butée (3225) destinée à être contactée par la surface de contact (47) lors de la mise en mouvement des lames l'une par rapport à l'autre pour éloigner le premier doigt d'indexage (41) de l'élément mobile (1).

## Patentansprüche

1. Vorrichtung, die Folgendes umfasst:
- ein bewegliches Element (1) mit Zähnen (11; 11ᵢ, 11ᵢ₊₁, 11ᵢ₊₂, 11ᵢ₊₃, 11ᵢ₊₄) und das in Bewegung gesetzt werden soll;
- ein Antriebselement (2), das in die Zähne (11; 11ᵢ, 11ᵢ₊₁, 11ᵢ₊₂, 11ᵢ₊₃, 11ᵢ₊₄) des beweglichen Elements (1) eingreifen soll, um das bewegliche Element (1) in einer Bewegungsrichtung in Bewegung zu setzen;
- ein Betätigungselement (3), das angepasst ist, eine Wechselbewegung zu erzeugen, um das Antriebselement (2) nach zumindest zwei Phasen, einer Antriebsphase und einer Rückkehrphase, zu bewegen,
bei der Antriebsphase greift das Antriebselement (2) mit zumindest einem Zahn (11; 11ᵢ, 11ᵢ₊₁, 11ᵢ₊₂, 11ᵢ₊₃, 11ᵢ₊₄) des beweglichen Elements (1) ein, um das bewegliche Element (1) zu schieben oder zu ziehen,
bei der Rückkehrphase ohne Antrieb ist das Antriebselement (2) gegenüber dem beweglichen Element (1) bewegt, um mit zumindest einem anderen Zahn (11; 11ᵢ, 11ᵢ₊₁, 11ᵢ₊₂, 11ᵢ₊₃, 11ᵢ₊₄) des beweglichen Elements (1) zu greifen,
- ein erstes Indexerelement (4), das einen ersten Indexierfinger (41) umfasst, der intermittierend in einen Raum zwischen zwei Zähnen (11; 11ᵢ, 11ᵢ₊₁, 11ᵢ₊₂, 11ᵢ₊₃, 11ᵢ₊₄) des beweglichen Elements (1) positioniert werden soll, um eine unkontrollierte Bewegung durch das Antriebselement in der Bewegungsrichtung des beweglichen Elements oder in entgegengesetzter Richtung zu verhindern;
**dadurch gekennzeichnet, dass**
das erste Indexierelement (4) mit dem Betätigungselement (3) verbunden ist, so dass das Betätigungselement (3) gleichzeitig das Antriebselement (2) und den ersten Indexierfinger (41) bewegt,
wobei das Betätigungselement (3) einen feststehenden Teil und einen gegenüber dem feststehenden Teil beweglichen Teil umfasst, das Antriebselement (2) und das Indexierelement (4) mit dem beweglichen Teil verbunden sind, und
das erste Indexierelement (4) Folgendes umfasst:
- einen ersten Balken (43) umfassend ein erstes freies Ende und ein zweites Ende, das mit dem Betätigungselement (3) verbunden ist; und
- einen zweiten Balken (45) umfassend ein erstes freies Ende und ein Ende, das mit einem feststehenden Rahmen (9) der Vorrichtung verbunden ist;
wobei der erste Balken (43) und der zweite Balken (45) mit ihren jeweiligen freien Enden miteinander verbunden sind, so dass eine durch das Antriebselement (3) angetriebene Bewegung des ersten Balkens (43) eine Biegung des zweiten Balkens (45) auslöst, was zur Wirkung hat, den ersten Indexierfinger (41) gegenüber dem beweglichen Element (1) zu bewegen.

2. Vorrichtung nach Anspruch 1, wobei der erste Indexierfinger (41) und das Betätigungselement (3) so konfiguriert sind, dass:
bei der Antriebsphase der erste Indexierfinger (41) durch das Betätigungselement (3) aus dem Raum zwischen den beiden Zähnen (11; 11ᵢ, 11ᵢ₊₁, 11ᵢ₊₂, 11ᵢ₊₃, 11ᵢ₊₄) des beweglichen Elements (1) bewegt wird; und
bei der Rückkehrphase der erste Indexierfinger (41) durch das Betätigungselement (3) in einen anderen Raum zwischen zwei anderen Zähnen (11; 11ᵢ, 11ᵢ₊₁, 11ᵢ₊₂, 11ᵢ₊₃, 11ᵢ₊₄) des beweglichen Elements (1) positioniert wird.

3. Vorrichtung nach einem der Ansprüche 1 und 2, das ferner ein zweites Indexierelement (5) umfasst, das einen zweiten Indexierfinger (51) enthält, der intermittierend zwischen zwei Zähnen (11; 11ᵢ, 11ᵢ₊₁, 11ᵢ₊₂, 11ᵢ₊₃, 11ᵢ₊₄) des beweglichen Elements (1) positioniert werden soll, wobei der zweite Indexierfinger (51) in entgegengesetzter Phase zum ersten Indexierfinger (41) bewegt wird.

4. Vorrichtung nach Anspruch 3, wobei der zweite Indexierfinger (51) des Betätigungselements (3) so konfiguriert sind, dass:
bei der Antriebsphase der zweite Indexierfinger (51) in den Raum zwischen den beiden anderen Zähnen (11; 11ᵢ, 11ᵢ₊₁, 11ᵢ₊₂, 11ᵢ₊₃, 11ᵢ₊₄) des beweglichen Elements (1) positioniert wird, in den der erste Indexierfinger (41) in der Rückkehrphase positioniert wird; und
bei der Rückkehrphase wird der zweite Indexierfinger (51) aus dem Raum zwischen den beiden Zähnen (11; 11ᵢ, 11ᵢ₊₁, 11ᵢ₊₂, 11ᵢ₊₃, 11ᵢ₊₄) des beweglichen Elements (1) bewegt.

5. Vorrichtung nach einem der Ansprüche 3 oder 4, wobei das zweite Indexierelement (5) ebenfalls mit dem Betätigungselement (3) verbunden ist, so dass das Betätigungselement (3) gleichzeitig das Antriebselement (2) und den zweiten Indexierfinger (51) bewegt.

6. Vorrichtung nach einem der vorstehenden Ansprüche 3 bis 5, wobei der zweite Indexerelement (5) Folgendes umfasst:
- einen ersten Balken (53) umfassend ein erstes freies Ende und ein zweites Ende, das mit dem Betätigungselement (3) verbunden ist; und
- einen zweiten Balken (55) umfassend ein erstes freies Ende und ein Ende, das mit dem feststehenden Rahmen (9) der Vorrichtung verbunden ist;
wobei der erste Balken (53) und der zweite Balken (55) mit ihren jeweiligen freien Enden miteinander verbunden sind, so dass eine durch das Antriebselement (3) angetriebene Bewegung des ersten Balkens (53) eine Biegung des zweiten Balkens (55) auslöst, was zur Wirkung hat, den ersten Indexierfinger (51) gegenüber dem beweglichen Element (1) zu bewegen.

7. Vorrichtung nach Anspruch 1 oder 2, wobei das Betätigungselement (3) eine Platte (32) umfasst, die sich in einer Längsrichtung erstreckt und auf einem Träger (8) befestigt werden muss,
wobei die Platte (32) zwei Klingen (321, 322) umfasst, die durch zumindest zwei flexible Stege (323, 324) miteinander verbunden sind und auf dem Träger zu befestigen sind, so dass eine Verformung unter Druck oder Zug des Trägers (8) eine Bewegung einer Klinge gegenüber der anderen in eine Bewegungsrichtung parallel zur Längsrichtung der Platte (32) erzeugt.

8. Vorrichtung nach Anspruch 7, wobei jede der Klingen (321, 322) ein proximales Ende (3211, 3221) und ein distales Ende (3212, 3222) umfasst,
wobei jede der Klingen (321, 322) an ihrem proximalen Ende (3211, 3221) ein Befestigungselement (3213, 3223) für die Befestigung am Träger (8) umfasst, und
wobei eine flexible Querstrebe (323, 324) das distale Ende (3212, 3222) einer Klinge (321, 322) mit dem proximalen Ende (3221, 3211) der anderen Klinge (322, 321) verbindet.

9. Vorrichtung nach Anspruch 7 oder 8, die ferner Folgendes umfasst ein Betätigungsmodul (7), das auf einer der Klingen (321) befestigt ist, wobei das bewegliche Element (1) drehbar auf der anderen Klinge (322) der Platte befestigt ist,
wobei das Betätigungsmodul (7) eine Basis (71), das Betätigungselement (3) und das Indexierelement (4) umfasst.

10. Vorrichtung nach Anspruch 9, wobei das Betätigungselement (3) einen Balken (23) umfasst, der sich parallel zur Bewegungsrichtung der Klingen erstreckt und an seinem freien Ende einen Antriebszahn (21) aufweist,
wobei das Indexierelement (4) einen ersten Balken (43) umfasst, der sich parallel zur Bewegungsrichtung der Klingen erstreckt und an seinem freien Ende einen Indexierfinger (41) aufweist, und einen zweiten Balken (45), der sich parallel zur Bewegungsrichtung der Klingen ab dem freien Ende des ersten Balkens (43) und in entgegengesetzter Richtung erstreckt und an seinem freien Ende eine Kontaktfläche (47) trägt,
wobei die zweite Klinge (322) einen Anschlag (3225) umfasst, der bei der Bewegungsaufnahme der Klingen zueinander von der Kontaktfläche (47) berührt werden soll, um den ersten Indexierfinger (41) des beweglichen Elements (1) zu entfernen.

## Claims

1. A device comprising:
- a mobile element (1) comprising teeth (11; 11ᵢ, 11ᵢ₊₁, 11ᵢ₊₂, 11ᵢ₊₃, 11ᵢ₊₄) and intended to be set in motion;
- a drive element (2) intended to engage with the teeth (11; 11ᵢ, 11ᵢ₊₁, 11ᵢ₊₂, 11ᵢ₊₃, 11ᵢ₊₄) of the mobile element (1) to set in motion the mobile element (1) in a direction of displacement;
- an actuator element (3) capable of generating alternative motion to move the drive element (2) in at least two phases, a driving phase and a return phase,
during the driving phase, the drive element (2) is engaged with at least one tooth (11; 11ᵢ, 11ᵢ₊₁, 11ᵢ₊₂, 11ᵢ₊₃, 11ᵢ₊₄) of the mobile element (1) to push or pull the mobile element (1),
during the return phase without driving, the drive element (2) is offset relative to the mobile element (1) to be engaged with at least one other tooth (11; 11ᵢ, 11ᵢ₊₁, 11ᵢ₊₂, 11ᵢ₊₃, 11ᵢ₊₄) of the mobile element (1),
- a first indexing element (4) comprising a first indexing finger (41) intended to be positioned intermittently in a space comprised between two teeth (11; 11ᵢ, 11ᵢ₊₂, 11ᵢ₊₃, 11ᵢ₊₄) of the mobile element (1) to prevent uncontrolled displacement by the drive element in the direction of displacement of the mobile element (1) or in the opposite direction;
**characterised in that**
the first indexing element (4) is connected to the actuator element (3) such that the actuator element (3) simultaneously moves the drive element (2) and the first indexing finger (41),
wherein the actuator element (3) comprises a fixed part and a mobile part relative to the fixed part, the drive element (2) and the indexing element (4) being connected to the mobile part, and
the first indexing element (4) comprises:
- a first beam (43) comprising a first free end and a second end connected to the actuator element (3); and
- a second beam (45) comprising a first free end and an end connected to a fixed chassis (9) of the device;
the first beam (43) and the second beam (45) being connected to each other by their respective free ends such that displacement of the first beam (43) driven by the actuator element (3) causes flexion of the second beam (45), the effect of which is to move the first indexing finger (41) relative to the mobile element (1).

2. The device according to Claim 1, wherein the first indexing finger (41) and the actuator element (3) are configured such that:
during the driving phase, the first indexing finger (41) is moved by the actuator element (3) out of the space between the two teeth (11; 11ᵢ, 11ᵢ₊₁, 11ᵢ₊₂, 11ᵢ₊₃, 11ᵢ₊₄) of the mobile element (1); and
during the return phase, the first indexing finger (41) is positioned by the actuator element (3) in another space between two other teeth (11; 11ᵢ, 11ᵢ₊₁, 11ᵢ₊₂, 11ᵢ₊₃, 11ᵢ₊₄) of the mobile element (1).

3. The device according to one of claims 1 and 2, further comprising a second indexing element (5) comprising a second indexing finger (51) intended to be positioned intermittently between two teeth (11; 11ᵢ, 11ᵢ₊₁, 11ᵢ₊₂, 11ᵢ₊₃, 11ᵢ₊₄) of the mobile element (1), the second indexing finger (51) being moved in phase opposition with the first indexing finger (41).

4. The device according to claim 3, wherein the second indexing finger (51) and the actuator element (3) are configured such that:
during the driving phase, the second indexing finger (51) is positioned in the space between the two other teeth (11; 11ᵢ, 11ᵢ₊₁, 11ᵢ₊₂, 11ᵢ₊₃, 11ᵢ₊₄) of the mobile element (1), in which the first indexing finger (41) will be positioned during the return phase; and
during the return phase, the second indexing finger (51) is moved out of the space between the two teeth (11; 11ᵢ, 11ᵢ₊₁, 11ᵢ₊₂, 11ᵢ₊₃, 11ᵢ₊₄) of the mobile element (1).

5. The device according to one of claims 3 or 4, wherein the second indexing element (5) is also connected to the actuator element (3) such that the actuator element (3) simultaneously moves the drive element (2) and the second indexing finger (51).

6. The device according to one of claims 3 to 5, wherein the second indexer element (5) comprises:
- a first beam (53) comprising a first free end and a second end connected to the actuator element (3); and
- a second beam (55) comprising a first free end and an end connected to the fixed chassis (9) of the device;
the first beam (53) and the second beam (55) being connected to each other by their free ends such that displacement of the first beam (53) driven by the actuator element (3) causes flexion of the second beam (55), the effect of which is to move the second indexing finger (51) relative to the mobile element (1).

7. The device according to claim 1 or 2, wherein the actuator element (3) comprises a plate (32) extending in a longitudinal direction to be fixed on a support (8),
wherein the plate (32) comprises two blades (321, 322) connected to each other by at least two flexible cross members (323, 324) and to be fixed on the support such that deformation in compression or traction of the support (8) generates displacement of one blade relative to the other in a direction of displacement parallel to the longitudinal direction of the plate (32).

8. The device according to claim 7, wherein each of the blades (321, 322) comprises a proximal end (3211, 3221) and a distal end (3212, 3222),
wherein each of the blades (321, 322) comprises at its proximal end (3211, 3221) a fixing element (3213, 3223) for fixing to the support (8), and
wherein a flexible cross member (323, 324) connects the distal end (3212, 3222) of a blade (321, 322) to the proximal end (3221, 3211) of the other blade (322, 321).

9. The device according to claim 7 or 8, further comprising an actuation base (7) fixed on one of the blades (321), the mobile element (1) being fixed in rotation on the other blade (322) of the plate,
wherein the actuation base (7) comprises a base (71), the actuator element (3) and the indexing element (4).

10. The device according to claim 9, wherein the actuator element (3) comprises a beam (23) which extends parallel to the direction of displacement of the blades and has at its free end a driving tooth (21),
wherein the indexing element (4) comprises a first beam (43) extending parallel to the direction of displacement of the blades and having at its free end an indexing finger (41), and a second beam (45) extending parallel to the direction of displacement of the blades from the free end of the first beam (43) and in the opposite direction, and bearing at its free end a contact surface (47),
wherein the second blade (322) comprises a stop (3225) intended to be contacted by the contact surface (47) during setting in motion of the blades relative to each other to move the first indexing finger (41) away from the mobile element (1).
